# EUROPEAN PATENT APPLICATION

(11) **EP 2 043 030 A2**
(43) Date of publication of application: **01.04.2009**
(21) Application number: 08012709.5
(22) Date of filing: 14.07.2008
(51) Int. Cl.: G06N 7/02

(54) **Segmented modeling of large data sets**

(30) Priority: 13.07.2007 US 777718
(71) Applicant: IS Technologies, LLC, Sartell, MN 56377 (US)
(72) Inventor: Morrison, Philip, Sartell, Minnesota 56377 (US)
(74) Representative: Richardson, Mark Jonathan

(57) **Abstract**

To provide efficient and effective modeling of data set, the data set is initially separated into several subsets which can then be processed independently. The subsets themselves are chosen to have some internal commonality, thus providing effective independent tools where possible. This commonality may include correlation between variables or interaction amongst the variables in the subset. Once separated, each subset is independently modeled, creating a subset model having predictive qualities related to the data subset. Next, the subset models themselves are aggregated to generate a overall final model. This final model is predictive of outcomes based upon all data in the data set, thus providing a more robust stable model.

## Description

### BACKGROUND OF THE INVENTION

The present invention relates to a system for efficient modeling of data sets. More specifically, the present invention provides a system and method for modeling large data sets in a manner to efficiently utilize processing resources and time.

Statistical or predictive modeling occurs for any number of reasons, and provides valuable information usable for many different purposes. Statistical modeling provides insight into data that has been collected, and identifies patterns or indicators that are inherent in the data. Further, statistical modeling of data may provide predictive tools for anticipating outcomes in any number of situations. For example, in financial analysis certain outcomes or responses are potentially predictable, based upon known data and statistical modeling techniques. Similarly, credit analysis can be accomplished utilizing statistical models of financial data collected for multiple subjects. Yet another example, in the product design and development process, modeling of test and evaluation data may be extremely useful in predicting desired causes and affects of certain characteristics, thus suggesting a possible design modifications and changes. Other uses of statistical modeling in industry are very well known, and recognized by those skilled in the art.

To achieve statistical modeling, the most basic requirements include a data set and a known outcome. From a conceptual perspective, the data set is often organized in a matrix format. In this matrix, the rows are utilized for a known or observed outcomes. For example, each row may contain numerous pieces of information related to a known customer which has defaulted on a loan. In this conceptual matrix, each column is arranged to contain a variable or value which is intended to predict the outcome. For example, each column could contain address information, employment status, home ownership status, previous credit information etc. As can be imagined, a typical database may include several columns or rows. Naturally, it is important to obtain some minimum amount of data to provide statistical validity.

As can be imagined, a typical matrix of data may be quite large. For example, it is not uncommon to have an overall database of twenty thousand rows (i.e. known outcomes). Such a typical database may include two hundred columns (i.e. predictive variables) containing important information. This database would clearly have sufficient information to produce a reasonable model which would have predictive value. However, to model this database and provide a usable statistical model, over four million pieces of data would need to be processed. As is clearly understood by those skilled in the art, the processing of four million data points requires significant processing power and a significant amount of time.

In looking at the actual steps carried out to produce a statistical model, it is well established that the number of columns (predictive variables) has a significant impact on overall processing time. The necessary processing time to model this matrix of data is not linearly related to the overall data points, but is rather exponentially related to the number of columns included in the data set. Consequently, the addition of new columns to any data set or matrix can significantly affect the amount of processing power and time required to achieve desired modeling. This further exaggerates a situation where modeling of these data sets is already an involved and time consuming process. Conversely, a matrix or data set with fewer columns will be much more manageable when modeling.

Previous approaches to modeling of large data sets has involved the elimination of selected variables prior to fitting the model. Simply stated, certain valuables are determined to be less predictive individually than others, and are consequently removed from the data set prior to model fitting. This "variable reduction" process is typically based on certain statistics and cutoffs related to the variables themselves. Unfortunately, determinations related to these variables may be somewhat arbitrary in nature. The decisions are not necessarily based upon a thorough and specific analysis of the particular data set involved. Further, this variable reduction takes place before any model fitting (regression) activity is undertaken for the specific data set involved. Thus, the actual effect of the variable reduction is unknown. This creates a potentially undesirable situation however, as variables which might provide lift when used together (an interaction), are eliminated individually. The only way to analyze the effect of a particular variable in its entirety, including the interaction component, is by including the variable in modeling and allowing the particular regression method (OLS, Logistic,...) to determine the value of all variables simultaneously. In certain situations, the variable reduction may clearly have an adverse effect. However, a tradeoff is made balancing the potential for adverse affect, with the reduction or savings of processing time.

In light of the tradeoffs involved with variable reductions, it is clearly beneficial to develop a modeling technique which can handle large data sets, while also decreasing the risk of adversely affecting the resulting model.

### BRIEF SUMMARY OF THE INVENTION

Recognizing that large matrices take time and processing power to deal with, the present invention more efficiently achieves a modeling of a data set by generating a number of sub-matrices, and processing each sub matrix individually. More specifically, the present invention evaluates the matrix of data, and breaks it into several sub-matrices, each sub-matrix having approximately the same number of rows, however significantly fewer columns. By reducing columns, the processing power and time necessary to perform modeling is greatly reduced. Once separate models are created for each sub-matrix, the models are then aggregated using similar statistical techniques. In this matter, the overall data modeling process is much more efficient and equally as effective.

As mentioned above, the present invention recognizes the interrelationship and complexity of typical data sets. Rather than simply eliminate certain variables to simplify the data set, the present invention provides a mechanism to better process and model the data to provide beneficial results. This processing involves the separation of data into various sub-matrices. By selecting these sub-matrices in an intelligent and efficient manner, additional benefits of the present invention are further realized. These benefits include much quicker processing time, more predictive and more stable models. Naturally, this provides more efficient and powerful tools for the end users.

As mentioned above, the present invention involves the creation of sub-matrices or subsets of data to allow more efficient processing. This initial step further recognizes that the sub-matrices can be selected in an intelligent manner to allow more efficient processing, more powerful models and additional tools. Generally speaking, it is beneficial to create sub-matrices or subsets of data, where each subset has some level of internal commonality. This internal commonality may include correlation of variables or interaction between included variables. Stated alternatively, there will typically be some relationship or logical reason for grouping these variables together. In one example, the data included in one particular subset is internally correlated, but does not necessarily having a strong correlation with data in other subsets. For example, each subset may address a particular subject area or subject type, such as payment history, home ownership history, demographic data, etc., thus making up a sub-category or subset for the particular matrix.

Next, the individual subsets are modeled to create several sub-models. Due to the categorization of information contained in the particular subset, each of these models may be beneficial in their own right. More importantly, the reduced size of each matrix provides processing efficiencies which may be exploited by the present invention. Once each sub-model is created, similar techniques can be utilized to create a single overall model based on the sub-models, the information produced as a byproduct of building the sub-models and the entire dataset as a whole.

As generally outlined above, it is an object of the present invention to provide a modeling methodology which can accommodate large datasets, while also efficiently utilizing processing power. By separating each dataset into a sub-matrix or subset, and subsequently modeling the subset allows for this increased efficiency. More specifically, a present invention provides modeling of manageable datasets alone, while also providing for the parallel modeling of subsets. These two considerations make efficient use of processor power thus reducing the time required to achieve modeling.

It is an object of the present invention to provide a modeling process which produces reliable predictive results, while also generating stable models based on datasets containing larger numbers of predictive variables than are typically modeled today. It is well understood that models which have more data to chose from, will generally be more predictive and more stable than models built with less data.

It is yet another object of the present invention to provide a modeling process which efficiently utilizes processor power and processor time. By processing models in smaller more manageable subsets, the time and processing power necessary to produce the various models is greatly reduced. Naturally, this reduction in time and processing power can be achieved without sacrificing the effectiveness of the model.

It is yet another object of the present invention to provide the modeling of selected subsets, such that the subset model itself may provide an independent tool. By selecting subsets of an overall data set in a manner to maintain some data correlation within the subset, certain predictive tools result.

It is a further object of the present invention to provide a modeling process which effectively combines several sub models without compromising the overall model integrity. By considering several sub models, the considerations of many different variables is maintained and the power of the overall model is greatly increased.

### BRIEF DESCRIPTION OF THE DRAWINGS

Further advantages and objects of the present invention can be seen by reading the following detailed description, in conjunction with the drawing in which:

Fig. 1 is a flowchart illustrating the processing steps of the present invention:

Fig. 2 is a data flow diagram, illustrating the data handling of the present invention:

Fig. 3 is a system schematic showing the various components of the present invention.

### DETAILED DESCRIPTION OF THE INVENTION

As generally outlined above, the present invention provides a system and method which efficiently processes very large data sets to provide data modeling in an appropriate manner. This process efficiently utilizes computer resources, by performing modeling steps with manageable data sets, thus performing modeling an effective manner.

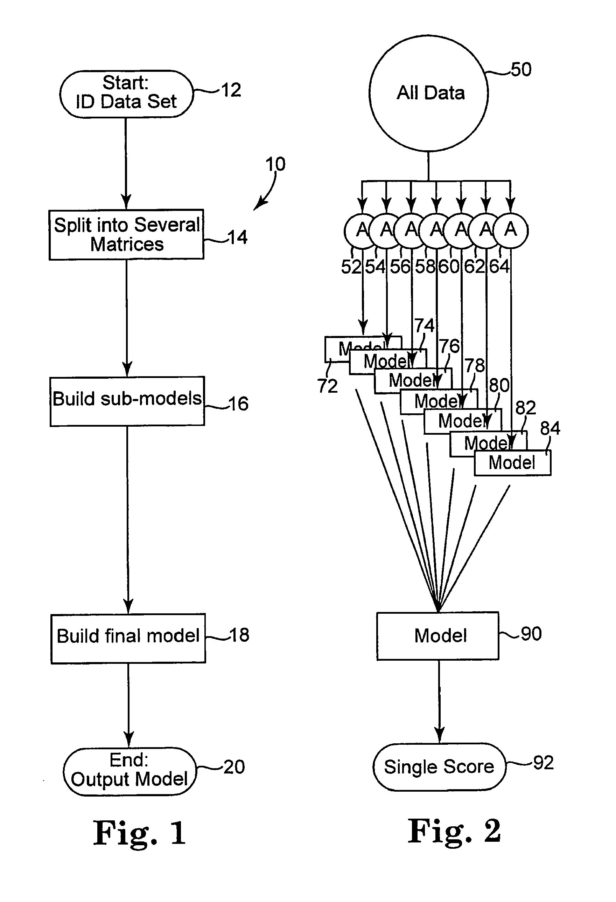

Referring to Fig. 1 there is illustrated a process flow diagram illustrating the steps carried out by the method of the present invention. This segmented modeling process 10 begins at a starting point 12 which is the initial modeling step. To initiate this start process, a particular data set is identified. It is clearly understood that the data set must have a minimum number of known outcomes, and corresponding predictive values (variables). Traditionally, these data sets will include information collected for a particular purpose, often unrelated to the modeling being done. Based upon this collected information, the goals of the modeling process itself is to generate a predictive model which suggests probable outcomes based upon certain new variables. The present process is directed towards those data sets which are very large and often difficult to manage due to their size. In most instances, the modeling of these data sets is extremely time consuming and processor intensive due to the sheer amount of data included.

Typically, the data sets themselves are configured as a matrix of information. In this matrix, the known outcomes are configured as rows of data, while the columns are made up of the predictive values (i.e. variables). Naturally, these data sets need not necessarily be stored in the matrix format, or identified that way in actual storage. As well understood, these data sets could be distributed and stored in multiple places, however the organization and referencing will allow the process of the present invention to recognize this matrix configuration.

The process of the present invention will then move to step 14 where the matrix data set is then split or separated into several matrices. In one embodiment of the invention, the matrices are separated in a very organized manner, so that similar types of data or similar types of variables are arranged into a single sub matrix. Thus, there will be some type of internal commonality between the variables contained in the sub matrix potentially including correlation between variables or interaction amongst the variables. As an example, one sub matrix may simply include all demographic data for each known outcome. Similarly, a second sub matrix may contain financial information for the same known outcomes. In yet another sub matrix, all variables related to validation information may be included. As the above examples illustrate, while it may be beneficial to provide correlation between the variables included in the single sub matrix, the correlation between the various sub matrices is not necessarily important.

As can be appreciated, each sub matrix is appropriately chosen to be of the manageable size and configuration to make modeling more manageable and efficient. Stated alternatively, the sub-matrices are sized so that modeling can be effectively carried out utilizing reasonable processing power, and reasonable time periods. It is contemplated that each sub matrix will include the same number of known outcomes, while including considerably fewer variables. As such, the overall size and overall amount of data is greatly reduced.

The separation of data into sub-matrices can be carried out in a number of ways. As will be further discussed below, the process used in creating the sub matrices can provide some inherent advantages related to the efficiency and additional value of the resulting segment models. As generally discussed above, previous methods of variable reduction have created a risk of undesirably losing interactions or correlations between variables. A similar risk exists when separating a data set into a plurality of data subsets. Consequently, managing this separation process will greatly improve the efficiency of the subsequent models.

The most optimum method for separating a data set into subsets involves the use of prior knowledge. More specifically, if it is well known that certain variables interact with one another, this relationship can be accounted for when separating variables into subsets. In the case where correlation between variables is known, those "correlated variables" are thus placed in the same sub-matrix, thereby providing the ability for the sub-model to account for the known correlations. Naturally, the existence of known correlations requires previous modeling experience to identify those situations. As can be appreciated, this knowledge does not always exist, meaning that this approach may not be ideal for all situations.

An alternative approach to separating the data set into a plurality of sub-sets involves a statistical analysis which attempts to identify correlation between variables. For example, a covariance matrix or a matrix of Spearman correlation coefficients can be calculated utilizing well known tools. Inspection of this matrix thus allows for the "intelligent" separation of data into sub-sets.

Using another approach, a theoretical separation could be created. This approach analyzes the potential variables and identifies those particular variables which theoretically should not interact with one another. Typically, the identified variables will not interact because they perform different functions. For example, certain variables may predict a likelihood of a response, while other variables may help predict a likelihood of payment. In the context of creating or generating a predictive model, one would theoretically assume that such variables would not interact with one another. Consequently, these variables are easily separated into different subsets during the separation process.

One last methodology may involve a principle components analysis. In this analysis, the principle components of the various variables are analyzed, and appropriately separated, using logic somewhat similar to the theoretical approach outlined above.

As illustrated, each of the above listed approaches involves a calculated or planned approach to variable separation during the creation of subsets. As a result of this separation process, and the consideration of correlation between variables, the subsequent modeling will inherently be more effective and efficient.

Referring again to Fig. 1 the process of the present invention moves on to modeling step 16 wherein each sub-matrix is modeled independently. Due to the reduced size of each sub matrix, it is also unnecessary to eliminate variables prior to modeling. Consequently, each model will take into consideration a majority of the information provided. This allows for modeling which is more robust and inclusive. More importantly, this avoids the potential adverse effects of variable reduction.

The next step in the process is the building of a final model 18, which involves an aggregation of the various sub models in one of at least three different ways, to produce one final model representative of the entire data set. The combination of sub models utilizes well understood modeling techniques, known to those skilled in the art. In this application however, these techniques are being applied to the sub-models previously generated. The use of multiple sub models, and their aggregation to build a final model, provides an overall process which much more efficiently fits the data set provided, while greatly reducing processing time and necessary power. In the final step of the process, the final model is output, at step 20.

As mentioned, the present invention includes the generation of segment models for each segmented data set as part of its overall process. While this aspect of the present invention contributes to the overall efficiency of the described modeling process, it should be appreciated that the segmented models themselves may provide valuable tools. For example, assuming that a limited amount of information is available for a particular subject, and that information is similar to the information provided in a particular data sub-set or data segment, the segment model alone could be utilized to provide predictive capabilities. Alternatively, the segment model itself may provide some additional insight into characteristics of the overall data set.

Again, the segment models discussed above are combined to build a final predictive model based upon the entire data set. In one embodiment this process is generally described as an aggregation of models. In an alternative embodiment, the creation of a final or comprehensive predictive model may be achieved by fitting the final model using a subset of the original set of variables, chiefly including those variables identified as important in the segment models. In this embodiment, fitting the sub-models serves to identify the most predictive elements in the overall matrix. This information can then be used in the subsequent modeling of the revised subset of variables.

As discussed above, one risk of variable reduction prior to modeling is the undesirable elimination of variables which may contribute to the model. An exemplary situation where this risk of undesirable reduction exists occurs is when variables are interrelated. More specifically, when reviewing the variables themselves, it may not appear that a particular variable is significant or contributing based upon a raw analysis of the variables alone. However, when the variable is included, the interaction between itself and another variable may be significant. By performing segmented modeling, as outlined above, the interaction between two variables can potentially be seen. Conversely, the segment modeling may verify that the variable in question is not necessarily significant. Analyzing the segment models and identifying any interaction between variables could easily provide a valuable tool when generating an efficient and effective final model.

Based upon the appropriate selection of the desired sub-populations, this second embodiment allows a means to eliminate variables from consideration in the final model which accounts for most interactions between variables. While certain variables are eliminated or removed from the segmented models, this elimination is more informed than standard variable reduction techniques as it allows interactions among variables to be considered for certain variables to be eliminated or removed from the segmented models during the process of generating the final model without the risk of losing model effectiveness. This process does involve the reduction of variables, however the reductions are done in a much more informed and knowledgeable manner. Thus, the process for generating the predictive model utilizing this alternative embodiment generally includes the segmenting of data and the generation of segment models as discussed above. However, once the segment models are generated, the results are analyzed to identify which subset of variables should be included in fitting the final model. In this way, the segment models are used solely as an alternative method of reducing the set of variables to be considered in the final model fitting.

These variables, having been identified as important by a sub-model, are then placed into a new matrix, and a model is created using this revised data set. Obviously, this process involves the creation of a new data set and the modeling that new data set. That said, the final modeling process is more parsimonious as the data set includes only those variables that are relevant to the final model. Using this alternative embodiment, the segment models are utilized to perform variable reduction techniques using an informed and educated methodology.

A further embodiment includes the combination of segment models along with additional variables which might provide additional value in the final model. These additional variables may be part of the data subsets used to generate the segment models, or may be additional variables not previously considered. In this embodiment, the additional variables may be withheld from the sub-model builds for later inclusion based on theoretical or practical reasons known to those practiced in the art and familiar with the particular modeling effort.

As illustrated in the paragraphs above, it is obvious that alternatives exist when creating the segment models or the final model. In each of the alternatives however, the classification of data into segments, and the creation of segment models provides advantages in the overall modeling process.

Referring now to Fig. 2, a data flow diagram is illustrated which corresponds to the process of Fig. 1. As can be seen in Fig. 2, the process starts by identifying a data set 50 which includes all data which is intended to be considered. As discussed above, once the data set is identified, the process and system of the present invention will separate the data set into a number of subsets. In this particular case, the subsets are traditionally sub matrices made up of a selected portion of the data set. In the example illustrated in Fig. 2, the overall data set has been separated into a first subset, 52, second subset 54, third subset 56, fourth subset 58, fifth subset 60, sixth subset 62 and seventh subset 64. It is clearly intended that the number of subsets is dependent upon the particular data set involved. Naturally, in certain situations fewer subsets will be appropriate, while in other situations more subsets will be necessary.

As also shown in Fig. 2, each subset is modeled to create subset models, corresponding to each data subset. Thus, illustrated in Fig. 2 is a first subset model 72, a second subset 74, a third subset model 76, a fourth subset model 78, a fifth subset model 80, a sixth subset model 82, and a seventh subset model 84. As clearly illustrated, each subset model corresponds to a single data subset, which was previously identified. Next, a final model 90 is created from each of the subset models. As mentioned above, the overall model 90 is an aggregation of the various subset models previously calculated. This overall model 90 is much more robust and stable due to the inclusion of most variables provided in the data set 50. However, due to the subset modeling technique illustrated, the overall model 90 is generated in a much more efficient manner. As shown in Fig. 2, this overall model 90, is thus capable of generating a single score 92 when additional information is subjected to the model. This single score 90 will be predictive of a potential outcome based upon the data provided.

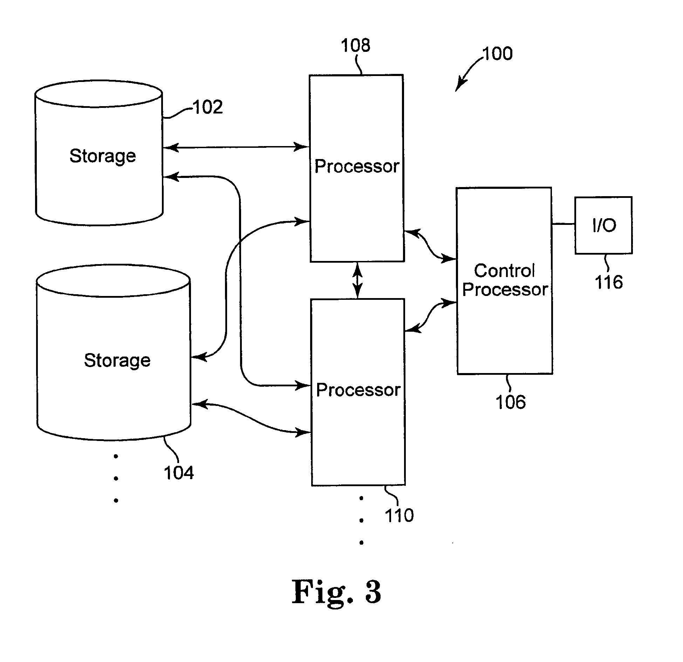

In Fig. 3, there is shown an exemplary system 100 capable of carrying out the process of the present invention. Processing system 100 (or computing system 100) includes a first storage device 102 and a second storage device 104. Each of these storage devices (first storage device 102 and second storage device 104) are capable of further, computing system 100 includes a control processor 106 which is tasked with overall control for system 100. Control processor 106 is operatively coupled to a first processor 108 and a second processor 110. Each processor is capable of carrying out multiple processing steps, as instructed and coordinated by control processor 106. First processor 108 and second processor 110 are coupled to both first storage device 102 and second storage device 104 in order to retrieve data as necessary. In this particular example, the data sets being modeled are stored in these various storage devices. The control processor 106 also includes a input/output device 116, which may include a keyboard, display screen, or combination of those components. As such, a user is able to interact with computing system 100 via input/output device 116.

As will be understood, the computing system 100 illustrated in Fig. 3 could easily include other components. In all likelihood, data storage will be distributed amongst a large number of storage devices. The various processors will have the capability to access this distributed data storage as necessary. Further, the computing system 100 will likely include more than two processors. These multiple processors are provided to allow the ability to perform processing in parallel as desired. As contemplated, the various modeling steps outlined above will likely be achieved utilizing parallel processing, which necessarily requires multiple processors within computing system 100.

Again, computing system 100 shown in Fig. 3 is merely one example. Those skilled in the art will recognize that multiple variations are possible. For example, many different storage devices could be utilized and additional processors could also be employed.

### Example

Because correlations run on missing observations may lead to erroneous results, variables, or columns, are first separated into groups/segments which are missing on substantially similar sets of observations, or rows. In one example in which internet purchase behaviour is predicted, this step may identify, say 19 different groups/segments from, say 6448 total candidate variables for the model. These differences may be driven by the availability or non-availability of particular data for particular individuals, or it may be driven by the quality or existence of the input data for a particular customer. For example, if some input records contain telephone number while others do not, data pertaining to the telephone number would most likely not be available for those records without an input telephone number.

If there are groups/segments resultant from the first step which are too large, where "too large" can depend on factors like the physical characteristics of the computer on which the processing will occur and the characteristics of the problem, the "large" segments can be further split into smaller segments. This segmenting can be arbitrary, based on a rule of thumb or based on a statistical technique such as factor analysis. A solution employing a standard correlation or covariance matrix can be as simple as follows:
1) produce a correlation or covariance matrix including the dependent variable and the segment to be sub-divided;
2) identify the "best" column(variable) as the column with the highest correlation to the dependent variable;
3) select the N records having the highest correlation with the "best" record as one new matrix of appropriate size; and
4) repeat steps 2 and 3 using the remaining vectors until matrices all matrices are appropriately sized.

In our example of Internet response prediction, one of the nineteen original sub-matrices was split into three matrices by this step leading to a total of 21 sub-matrices with an average size of 307 columns each.

Clearly there are cases in which substantially all attributes(columns) are available for substantially all observations(rows). In these cases the initial step would fail to generate any sub-matrices and only the second, factor/correlation step would identify sub-matrices.

In the internet purchase prediction model, twenty-one predictive segment models were then developed using logistic regression on each of the sub-matrices. These sub-models produced K-S statistics (a measure of predictive separation power where higher is better) between 0.0 and 23.7. One final model was created from the segment models to produce the final model with a K-S of 31.9. The final internet purchase prediction model included 275 variables from 18 different sub-segments.
In order that the invention may be readily understood, reference will be made, by way of example only, to the following numbered clauses:
1. A method for efficiently modeling a complex data set, wherein the data set being modeled includes a plurality of known outcomes along with a plurality of variables related to the known outcomes, the method comprising:
   selectively segmenting the data set into a plurality of data subsets, with each subset including a selected subset of variables along with the known outcomes corresponding to the selected subset of variables;
   processing each data subset to generate a plurality of data subset models with each data subset model corresponding to one of the data subsets and having a predictive capability in relation to the data subset, the data subset model being generated using a predetermined data modeling methodology; and
   processing the plurality of data subset models to generate a comprehensive predictive model for the complex data set.
2. The method of clause 1 wherein the data subsets are generated using a predetermined criteria to have internal commonality within each data subset.
3. The method of clause 1 wherein the processing of data subsets is achieved in parallel.
4. The method of clause 1 wherein each data subset model is usable independently to provide a limited predictive function based upon the variables included in the subset.
5. The method of clause 1 wherein the data subset includes data from a predetermined category, the category selected from the group of demographic data, census data, verification data, validation data, payment data or purchases data.
6. The method of clause 1 wherein the comprehensive predictive model including a consideration of all variables in the complex data set.
7. The method of clause 1 wherein the data subset includes data selected according to a predetermined rule.
8. The method of clause 7 wherein the predetermined rule is a statistical algorithm.
9. A method for producing a predictive model based upon a complex data set containing a plurality of known variable values and a plurality of known outcomes based upon the plurality of known variable values, wherein the predictive model provides a tool for application to further predictions when applied to subject data which is not part of the complex data set, the method comprising:
   organizing the dataset into a plurality of segments, with each segment having a subset of included variables and the corresponding variable values along with a plurality of known outcomes corresponding to the subset of variable values, the subset of variables being internally related based upon a common characteristic;
   processing each segment to produce a segment model for each of the plurality segments, each segment model being a predictive model based upon the segment and capable of independently providing predictive capabilities based upon the data contained in the corresponding segment; and
   processing the segment models for the plurality of segments to generate the predictive model based upon a consideration of all variables contained in the complex data set.
10. The method of clause 9 wherein processing of each segment to product the segment models is achieved in parallel.
11. The method of clause 9 wherein the plurality of segments include data from at least two predetermined categories, the predetermined categories selected from the group of demographic data, census data, verification data, validation data, payment data or purchases data.
12. The method of clause 9 wherein the subset of variables included in a segment are selected to provide internal commonality amongst the variables.
13. The method of clause 12 wherein correlation is provided by having the plurality of segments include data from at least two predetermined categories, the predetermined categories selected from the group of demographic data, census data, verification data, validation data, payment data or purchases data.
14. The method of clause 13 wherein the segment model is capable of predicting an outcome based upon new data provided to the segment model within the predetermined category.
15. The method of clause 9 wherein generating the predictive model comprises the selective elimination of variables based upon an analysis of the segment models.
16. The method of clause 9 wherein the plurality of data segments each include data selected according to predetermined rules.
17. The method of clause 16 wherein the predetermined rules are statistical algorithms.
18. A system for producing a predictive model based upon a complex data set containing a plurality of known variable values and a plurality of known outcomes based upon the plurality of known variable values, wherein the predictive model provides a tool for application to further predictions when applied to subject data which is not part of the complex data set, the system comprising:
   a storage device for storing a database which includes the complex data set;
   at least one processor in communication with the storage device, the processor capable of organizing the dataset into a plurality of segments, with each segment having a subset of included variables and the corresponding variable values along with a plurality of known outcomes corresponding to the subset of variable values, the at least one processor further capable of processing each segment to produce a segment model for each of the plurality segments with each segment model being a predictive model based upon the segment and capable of independently providing predictive capabilities based upon the data contained in the corresponding segment, and subsequently processing the segment models for the plurality of segments to generate the predictive model based upon a consideration of all variables contained in the complex data set.
19. The system of clause 18 further comprising a second processor operating in parallel with the at least one processor to produce the segment models.
20. The system of clause 18 wherein the storage device is a distributed storage system.
21. The system of clause 20 wherein the storage device and the at least one processor communicate with one another via network communication.
22. The system of clause 18 wherein the storage device comprises a plurality of databases in communication with the processor, wherein each database contains at least one segment of the data set.
23. The system of clause 18 wherein the data subset stored in the storage device includes data from a predetermined category, the category selected from the group of demographic data, census data, verification data, validation data, payment data or purchases data.
24. The system of clause 19 further comprising a control processor in communication with the at least one processor, the second processor and the storage device for efficiently coordinating the transfer of information and the modeling activities.
25. The system of clause 18 wherein the data subset stored in the storage device includes data selected according to a predetermined rule.
26. The system of clause 25 wherein the predetermined rule is a statistical algorithm.
27. The system of clause 25 wherein the predetermined rule requires interaction amongst variables.
28. The method of clause 2 wherein the internal commonality within the dataset includes correlation of data.
29. The method of clause 2 wherein the internal commonality of the dataset includes some level of interaction amongst the data.
   The above embodiments of the present invention have been described in considerable detail in order to illustrate their features and operation. It is clearly understood however that various modifications can be made without departing from the scope and spirit of the present invention.

## Claims

1. A system for producing a predictive model based upon a complex data set containing a plurality of known variable values and a plurality of known outcomes based upon the plurality of known variable values, wherein the predictive model provides a tool for application to further predictions when applied to subject data which is not part of the complex data set, the system comprising:
a storage device for storing a database which includes the complex data set;
at least one processor in communication with the storage device, the processor capable of organizing the dataset into a plurality of segments, with each segment having a subset of included variables and the corresponding variable values along with a plurality of known outcomes corresponding to the subset of variable values, the at least one processor further capable of processing each segment to produce a segment model for each of the plurality segments with each segment model being a predictive model based upon the segment and capable of independently providing predictive capabilities based upon the data contained in the corresponding segment, and subsequently processing the segment models for the plurality of segments to generate the predictive model based upon a consideration of all variables contained in the complex data set.

2. The system of claim 1 further comprising a second processor operating in parallel with the at least one processor to produce the segment models.

3. The system as claimed in either claim 1 or claim 2 wherein the storage device is a distributed storage system.

4. The system of claim 3 wherein the storage device and the at least one processor communicate with one another via network communication.

5. The system as claimed in any preceding claim wherein the storage device comprises a plurality of databases in communication with the processor, wherein each database contains at least one segment of the data set.

6. The system as claimed in any preceding claim wherein the data subset stored in the storage device includes data from a predetermined category, the category selected from the group of demographic data, census data, verification data, validation data, payment data or purchases data.

7. The system as claimed in claim 2 or in any of claims 3 to 6 when dependent on claim 2 further comprising a control processor in communication with the at least one processor, the second processor and the storage device for efficiently coordinating the transfer of information and the modeling activities.

8. The system as claimed in any preceding claim wherein the data subset stored in the storage device includes data selected according to a predetermined rule.

9. The system of claim 8 wherein the predetermined rule is a statistical algorithm.

10. The system of claim 8 wherein the predetermined rule requires interaction amongst variables.

11. A method for efficiently modeling a complex data set, wherein the data set being modeled includes a plurality of known outcomes along with a plurality of variables related to the known outcomes, the method comprising:
selectively segmenting the data set into a plurality of data subsets, with each subset including a selected subset of variables along with the known outcomes corresponding to the selected subset of variables;
processing each data subset to generate a plurality of data subset models with each data subset model corresponding to one of the data subsets and having a predictive capability in relation to the data subset, the data subset model being generated using a predetermined data modeling methodology; and
processing the plurality of data subset models to generate a comprehensive predictive model for the complex data set.

12. The method of claim 11 wherein the data subsets are generated using a predetermined criteria to have internal commonality within each data subset.

13. The method of claim 12 wherein the internal commonality within the dataset includes correlation of data.

14. The method of claim 12 wherein the internal commonality of the dataset includes some level of interaction amongst the data.

15. A method for producing a predictive model based upon a complex data set containing a plurality of known variable values and a plurality of known outcomes based upon the plurality of known variable values, wherein the predictive model provides a tool for application to further predictions when applied to subject data which is not part of the complex data set, the method comprising:
organizing the dataset into a plurality of segments, with each segment having a subset of included variables and the corresponding variable values along with a plurality of known outcomes corresponding to the subset of variable values, the subset of variables being internally related based upon a common characteristic;
processing each segment to produce a segment model for each of the plurality segments, each segment model being a predictive model based upon the segment and capable of independently providing predictive capabilities based upon the data contained in the corresponding segment; and
processing the segment models for the plurality of segments to generate the predictive model based upon a consideration of all variables contained in the complex data set.
